(19) Europäisches Patentamt
European Patent Office
Office européen des brevets

(11) **EP 4 125 089 A1**

(12) **EUROPEAN PATENT APPLICATION**

(43) Date of publication:
**01.02.2023 Bulletin 2023/05**

(21) Application number: **22162982.7**

(22) Date of filing: **18.03.2022**

(51) International Patent Classification (IPC):
**G11B 27/031** (2006.01)    **G11B 27/10** (2006.01)

(52) Cooperative Patent Classification (CPC):
**G11B 27/10; G11B 27/031**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.07.2021 CN 202110858002**

(71) Applicant: **Beijing Dajia Internet Information Technology Co., Ltd.**
**Beijing 100085 (CN)**

(72) Inventor: **Li, Zhao**
**Beijing 100085 (CN)**

(74) Representative: **Angerhausen, Christoph**
**Boehmert & Boehmert**
**Anwaltspartnerschaft mbB**
**Pettenkoferstrasse 22**
**80336 München (DE)**

(54) **METHOD AND APPARATUS FOR PROCESSING VIDEO, ELECTRONIC DEVICE AND STORAGE MEDIUM**

(57)    A method for processing a video, includes: obtaining target music data and video clip information including clip duration of original video clips; determining cropping information of the original video clips based on beat information of the target music data and the clip duration of the original video clips; and displaying a target video on a video processing interface; the target video being obtained by cropping and splicing the original video clips based on the cropping information; the target video having at least one video splicing point corresponding to beat points in the beat information, in which the beat information of the target music data is original beat information of the target music data.

FIG. 5

## Description

<u>FIELD</u>

The disclosure relates to the field of internet techniques, and more particularly, to a method and an apparatus for processing a video, an electronic device and a storage medium.

<u>BACKGROUND</u>

The development of network techniques has made video applications very popular in people's daily lives. Video interactive software provides diversified operation experience for users such as users may shoot videos of different styles anytime and anywhere, add various special effects for videos and set background music of different types for videos.

<u>SUMMARY</u>

A method for processing a video is provided. The method includes: obtaining target music data and video clip information; the video clip information including clip duration of original video clips; determining cropping information of the original video clips based on beat information of the target music data and the clip duration of the original video clips; and displaying a target video on a video processing interface; the target video being obtained by cropping and splicing the original video clips based on the cropping information; the target video having at least one video splicing point corresponding to beat points in the beat information, in which the beat information of the target music data is original beat information of the target music data.

In some embodiment, the method further includes: obtaining the beat information of the target music data by beat analysis on the target music data; or, obtaining the beat information of the target music data from a beat information storage area based on identification information of the target music data.

In some embodiment, the method further includes: sending a music obtaining request to a server, the music obtaining request including the identification information of the target music data; and receiving the beat information of the target music data from the server; the beat information of the target music data being obtained by the server performing beat analysis on the target music data, and the beat information of the target music data being stored in the beat information storage area of the server.

In some embodiment, said determining the cropping information of the original video clips based on the beat information of the target music data and the clip duration of the original video clips, includes: for each original video clip, determining a cropping range of the original video clip based on the clip duration of the original video clip; obtaining positions of all video frames within the cropping range of the original video clip; and determining the cropping information of the original video clip based on the positions of all the video frames and the beat points.

In some embodiment, said determining the cropping information of the original video clip based on the positions of all the video frames and the beat points, includes: obtaining a target video frame by quality analysis on the video frames within the cropping range in response to that there're multiple positions of video frames corresponding to the beat points within the cropping range; and determining the cropping information of the original video clip based on a position of the target video frame.

In some embodiment, the method further includes: determining the cropping range of the original video clip based on a key clip of the original video clip, the key clip being determined based on a fascinating degree value of video frames; and/or; determining the cropping range of the original video clip based on cropping indication information, the cropping indication information being generated based on user setting information.

In some embodiment, the method further includes: determining a first target video clip from the original video clips; clip duration of the first target video clip being less than or equal to a cropping duration threshold.

In some embodiment, the method further includes: determining the cropping duration threshold based on clip duration of video clips in target historical videos that satisfy requirements, and/or, determining the cropping duration threshold based on the clip duration of the original video clips.

In some embodiment, said determining the cropping duration threshold based on the clip duration of the video clips in the target historical videos that satisfy the requirements, includes: obtaining a set of historical videos; determining the target historical videos that satisfy the requirements from the set of historical videos based on video attribute information, where the video attribute information includes at least one of: a number of reposts, a number of views, a number of likes, a number of rewards, a number of fans and a number of comments; and obtaining the cropping duration threshold by analyzing the clip duration of the video clips in the target historical videos.

In some embodiment, in response to that the first target video clip exists in the original video clips, said determining the cropping information of the original video clips based on the beat information of the target music data and the clip duration of the original video clips includes: determining one or more second target video clips from the original video clips based on the cropping duration threshold; and determining cropping information of the one or more second target video clips based on the beat information of the target music data, clip duration of the first target video clip and clip duration of the one or more second target video clips.

In some embodiment, said determining the cropping information of the one or more second target video clips based on the beat information of the target music data, the clip duration of the first target video clip and the clip duration of the one or more second target video clips, includes: obtaining a first video by splicing the first target video clip and the one or more second target video clips based on a splicing serial number of the first target video clip and one or more splicing serial numbers of the one or more second target video clips, in which the first video is a first video; duration of the first video is a sum of the clip duration of the first target video clip and the clip duration of the one or more second target video clips; and determining sequentially the cropping information of the one or more second target video clips based on the beat points in the beat information and a preset processing direction.

In some embodiment, the preset processing direction includes a forward direction of a splicing direction, and said determining sequentially the cropping information of the one or more second target video clips based on the beat points in the beat information and the preset processing direction, includes: determining a first one of the one or more second target video clips in the first video based on the forward direction of the splicing direction; determining a first beat point of the first one of the one or more second target video clips based on a reverse direction of the splicing direction in response to that there's no beat point at an end point of the first one of the one or more second target video clips; the first beat point being between two consecutive video frames; and determining cropping information of the first one of the one or more second target video clips based on a time point corresponding to the first beat point and a time point corresponding to the end point.

In some embodiment, said determining the cropping information of the first one of the one or more second target video clips based on the time point corresponding to the first beat point and the time point corresponding to the end point, includes: determining a cropping duration to be cropped, of the first one of the one or more second target video clips, based on a difference between the time point corresponding to the first beat point and the time point corresponding to the end point; and cropping the first one of the one or more second target video clips based on a preset cropping manner and the cropping duration; the preset cropping manner includes cropping from a head of the clip, cropping from an end of the clip, cropping from a middle of the clip and cropping based on content quality of the clip.

In some embodiment, the preset cropping manner is cropping based on content quality of the clip, said cropping the first one of the one or more second target video clips based on the preset cropping manner and the cropping duration, includes: segmenting the first one of the one or more second target video clips into sub-clips; total duration of the sub-clips being equal to clip duration of the first one of the one or more second target video clips; obtaining a content quality value of each of the sub-clips by a content quality assessment on each of the sub-clips based on a quality assessment parameter; and cropping out a sub-clip that does not satisfy quality requirements from the sub-clips based on the content quality value of each of the sub-clips and the cropping duration; the quality evaluation parameter includes color saturation, sharpness, richness of content and brightness.

In some embodiment, the preset cropping manner is cropping based on content quality of the clip, said cropping the first one of the one or more second target video clips based on the preset cropping manner and the cropping duration, includes: segmenting the first one of the one or more second target video clips into sub-clips; total duration of the sub-clips being larger than clip duration of the first one of the one or more second target video clips, in which there's repeated clip in each sub-clip and adjacent sub-clip; obtaining a content quality value of each of the sub-clips by a content quality assessment on each of the sub-clips based on a quality assessment parameter; and cropping out a sub-clip that does not satisfy quality requirements from the sub-clips based on the content quality value of each of the sub-clips and the cropping duration; the quality evaluation parameter includes color saturation, sharpness, richness of content, brightness and/or degree of coherence.

In some embodiment, displaying the target video on the video processing interface, includes: performing a first splicing adjustment on the first video based on the cropped first one of the one or more second target video clips; determining a second one of the one or more second target video clips based on the first video after the first splicing adjustment, and cropping the second one of the one or more second target video clips based on a cropping manner of the first one of the one or more second target video clips; performing a second splicing adjustment on the first video based on the cropped second one of the one or more second target video clips, until a cropping process of a last one of the one or more second target video clips is completed; displaying the target video on the video processing interface, where the target video is obtained after cycles of cropping and splicing of the first video.

In some embodiment, the beat information further includes a beat speed, and the method further includes: determining transition effect information corresponding to the beat speed; and adding the transition effect information at the at least one video splicing point corresponding to the beat points.

In some embodiment, the method further includes: determining downbeat level values corresponding to the beat points; determining a key beat point where the downbeat level value satisfies a preset level value; and adding downbeat effect information at a video splicing point corresponding to the key beat point.

In some embodiments, duration of the target video is the same as duration of the target music data; or; duration of the target video is the same as duration of a clipped target music data.

An electronic device is provided. The electronic device includes a processor; and a memory for storing instructions executable by the processor. The processor is configured to execute the instructions to perform any above method.

A storage medium is provided. When instructions in the storage medium are executed by a processor of an electronic device, the electronic device is caused to perform any above method.

An apparatus for processing a video is provided. The apparatus includes an obtaining module, a cropping information determining module and a displaying module. The obtaining module is configured to obtain target music data and video clip information; the video clip information including clip duration of original video clips in a set of video clips. The cropping information determining module is configured to determine cropping information of the original video clips based on beat information of the target music data and the clip duration of the original video clips. The displaying module is configured to display a target video on a video processing interface; the target video being obtained by cropping and splicing the original video clips based on the cropping information; the target video having at least one video splicing point corresponding to beat points in the beat information, in which the beat information of the target music data is original beat information of the target music data.

In some embodiments, the apparatus further includes a beat information obtaining module configured to: obtain the beat information of the target music data by beat analysis on the target music data; or, obtain the beat information of the target music data from a beat information storage area based on identification information of the target music data.

In some embodiments, the beat information obtaining module is configured to: send a music obtaining request to a server, the music obtaining request including the identification information of the target music data; and receive the beat information of the target music data from the server; the beat information of the target music data being obtained by the server performing beat analysis on the target music data, and the beat information of the target music data being stored in the beat information storage area of the server.

In some embodiments, the cropping information determining module is configured to: for each original video clip, determine a cropping range of the original video clip based on the clip duration of the original video clip; obtain positions of all video frames within the cropping range of the original video clip; and determine the cropping information of the original video clip based on the positions of all the video frames and the beat points.

In some embodiments, the cropping information determining module is configured to: obtain a target video frame by quality analysis on the video frames within the cropping range in response to that there're multiple positions of video frames corresponding to the beat points within the cropping range; and determine the cropping information of the original video clip based on a position of the target video frame.

In some embodiments, the apparatus is configured to: determine the cropping range of the original video clip based on a key clip of the original video clip, the key clip being determined based on a fascinating degree value of video frames; and/or; determine the cropping range of the original video clip based on cropping indication information, the cropping indication information being generated based on user setting information.

In some embodiments, the apparatus further includes a target video clip determining module configured to: determine a first target video clip from the original video clips; clip duration of the first target video clip being less than or equal to a cropping duration threshold.

In some embodiments, the apparatus further includes a cropping duration threshold module configured to: determine the cropping duration threshold based on clip duration of video clips in target historical videos that satisfy requirements, and/or, determine the cropping duration threshold based on the clip duration of the original video clips.

In some embodiments, the cropping duration threshold module is configured to: obtain a set of historical videos; determine the target historical videos that satisfy the requirements from the set of historical videos based on video attribute information, where the video attribute information includes at least one of: a number of reposts, a number of views, a number of likes, a number of rewards, a number of fans and a number of comments; and obtain the cropping duration threshold by analyzing the clip duration of the video clips in the target historical videos.

In some embodiments, the cropping information determining module is configured to, in response to the first target video clip exists in the original video clips: determine one or more second target video clips from the original video clips based on the cropping duration threshold; and determine cropping information of the one or more second target video clips based on the beat information of the target music data, clip duration of the first target video clip and clip duration of the one or more second target video clips.

In some embodiments, the cropping information determining module is configured to: obtain a first video by splicing the first target video clip and the one or more second target video clips based on a splicing serial number of the first target video clip and one or more splicing serial numbers of the one or more second target video clips, in which the first video is a first video; duration of the first video is a sum of the clip duration of the first target video clip and the clip duration of the one or more second target video clips; and determine sequentially the cropping information of the one or more second target video clips based on the beat points in the beat information and a preset processing direction.

In some embodiments, the preset processing direction includes a forward direction of a splicing direction, and the cropping information determining module is configured to: determine a first one of the one or more second target video clips in the first video based on the forward direction of the splicing direction; determine a first beat point of the first one of the one or more second target video clips based on a reverse direction of the splicing direction in response to that there's no beat point at an end point of the first one of the one or more second target video clips; the first beat point being between two consecutive video frames; and determine cropping information of the first one of the one or more second target video clips based on a time point corresponding to the first beat point and a time point corresponding to the end point.

In some embodiments, the cropping information includes a cropping duration, and the cropping information determining module is configured to: determine a cropping duration to be cropped, of the first one of the one or more second target video clips, based on a difference between the time point corresponding to the first beat point and the time point corresponding to the end point; and crop the first one of the one or more second target video clips based on a preset cropping manner and the cropping duration; the preset cropping manner includes cropping from a head of the clip, cropping from an end of the clip, cropping from a middle of the clip and cropping based on content quality of the clip.

In some embodiments, the cropping information determining module is configured to, in response to cropping based on content quality of the clip: segment the first one of the one or more second target video clips into sub-clips; total duration of the sub-clips being equal to clip duration of the first one of the one or more second target video clips; obtain a content quality value of each of the sub-clips by a content quality assessment on each of the sub-clips based on a quality assessment parameter; and crop out a sub-clip that does not satisfy quality requirements from the sub-clips based on the content quality value of each of the sub-clips and the cropping duration; the quality evaluation parameter includes color saturation, sharpness, richness of content and brightness.

In some embodiments, the cropping information determining module is configured to, in response to cropping based on content quality of the clip: segment the first one of the one or more second target video clips into sub-clips; total duration of the sub-clips being greater than to clip duration of the first one of the one or more second target video clips, in which there's repeated clip in each sub-clip and adjacent sub-clip; obtain a content quality value of each of the sub-clips by a content quality assessment on each of the sub-clips based on a quality assessment parameter; and crop out a sub-clip that does not satisfy quality requirements from the sub-clips based on the content quality value of each of the sub-clips and the cropping duration; the quality evaluation parameter includes color saturation, sharpness, richness of content, brightness and/or degree of coherence.

In some embodiments, the displaying module is configured to: perform a first splicing adjustment on the first video based on the cropped first one of the one or more second target video clips; determine a second one of the one or more second target video clips based on the first video after the first splicing adjustment, and crop the second one of the one or more second target video clips based on a cropping manner of the first one of the one or more second target video clips; perform a second splicing adjustment on the first video based on the cropped second one of the one or more second target video clips, until a cropping process of a last one of the one or more second target video clips is completed; display the target video on the video processing interface, where the target video is obtained after cycles of cropping and splicing of the first video.

In some embodiments, the beat information further includes a beat speed, and the apparatus further includes a transition effect adding module configured to: determine transition effect information corresponding to the beat speed; and add the transition effect information at the at least one video splicing point corresponding to the beat points.

In some embodiments, the apparatus further includes a downbeat effect adding module configured to: determine downbeat level values corresponding to the beat points; determine a key beat point where the downbeat level value satisfies a preset level value; and add downbeat effect information at a video splicing point corresponding to the key beat point.

In some embodiments, duration of the target video is the same as duration of the target music data; or; duration of the target video is the same as duration of a clipped target music data.

It is to be understood that both the foregoing general description and the following detailed description are exemplary and explanatory only and are not restrictive of the disclosure.

**BRIEF DESCRIPTION OF THE DRAWINGS**

The drawings, which are incorporated in and constitute a part of this specification, illustrate embodiments consistent with the disclosure and, together with the description, serve to explain the principles of the disclosure, but may not constitute an improper limitation of the disclosure.

FIG. 1 is a schematic diagram illustrating an application environment according to some embodiments of the disclosure.

FIG. 2 is a flowchart of a method for processing a video according to some embodiments of the disclosure.

FIG. 3 is a flowchart of determining beat information according to some embodiments of the disclosure.

FIG. 4 is a flowchart of determining cropping information according to some embodiments of the disclosure.

FIG. 5 is a schematic diagram illustrating a first video after splicing according to some embodiments of the disclosure.

FIG. 6 is a flowchart of determining cropping information of a second target video clip according to some embodiments of the disclosure.

FIG. 7 is a schematic diagram illustrating a second target video clip after cropping according to some embodiments of the disclosure.

FIG. 8 is a block diagram of an apparatus for processing a video according to some embodiments of the disclosure.

FIG. 9 is a block diagram of an electronic device for processing a video according to some embodiments of the disclosure.

## DETAILED DESCRIPTION

To enable those skilled in the art to better understand the technical solutions of the disclosure, the technical solutions in embodiments of the disclosure will be described clearly and completely with reference to the drawings.

It should be noted that the terms such as "first" and "second" in the specification and claims and the drawings of the disclosure are used to distinguish similar objects, and not necessarily used to describe a specific order or sequence. It should be understood that the data used in this way may be interchanged with each other under appropriate circumstances so that the embodiments of the disclosure described herein may be implemented in a sequence other than those illustrated or described herein. The implementation manners described in the following embodiments do not represent all implementation manners consistent with the disclosure. Rather, they are merely examples of apparatuses and methods consistent with some aspects of the disclosure as detailed in the appended claims.

It should be noted that user information (including user equipment information, user personal information and the like) and user data (including data for displaying, analyzed data and the like) described in the disclosure has been authorized by the user or fully authorized by all parties.

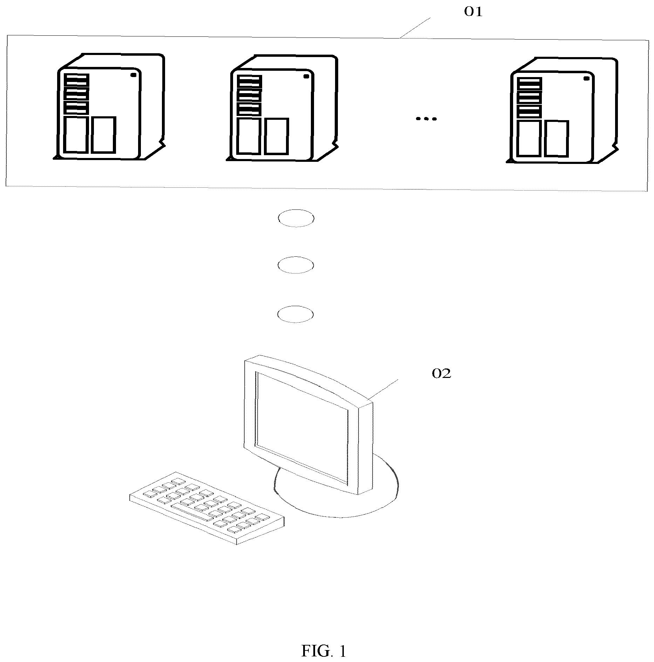

Referring to FIG. 1, FIG. 1 is a schematic diagram illustrating an application environment according to some embodiments of the disclosure. As illustrated in FIG. 1, the application environment may include a server 01 and a terminal device 02. Optionally, the server 01 and the terminal device 02 may be coupled to each other through a wireless link or a wired link, which is limited in the disclosure.

In some embodiments, the server 01 may provide different music data to the terminal device 02 for a user to select target music data through the terminal device 02. In detail, the server 01 may be an independent physical server, a server cluster or distributed system including a plurality of physical servers or a cloud server that may provide basic cloud computing services such as cloud services, cloud databases, cloud computing, cloud functions, cloud storage, network services, cloud communications, middleware services, domain name services, security services, CDN (Content Delivery Network), and big data and artificial intelligence platforms. Optionally, an operating system running on the server 01 may include, but be not limited to, IOS™, Linux™, Windows™, Unix™, Android™ and the like.

In some embodiments, the terminal device 02 may obtain target music data and video clip information; the video clip information including clip duration of original video clips; determine cropping information of the original video clips based on beat information of the target music data and the clip duration of the original video clips; and thus display a target video on a video processing interface; the target video being obtained by cropping and splicing the original video clips based on the cropping information; the target video having at least one video splicing point corresponding to beat points in the beat information, in which the beat information of the target music data is original beat information of the target music data. The terminal device 02 may include, but be not limited to an electronic device such as a smart phone, a desktop computer, a tablet computer, a laptop, a smart speaker, a digital assistant, an augmented reality (AR)/virtual reality (VR) device, a smart wearable device. Optionally, an operating system running on the terminal device 02 may include, but be not limited to, Android™, IOS™, Linux™, Windows™ and the like.

In addition, it should be noted that what is illustrated in FIG. 1 is one application environment of the method for processing the video, provided by the disclosure. In actual applications, other application environments may also be included.

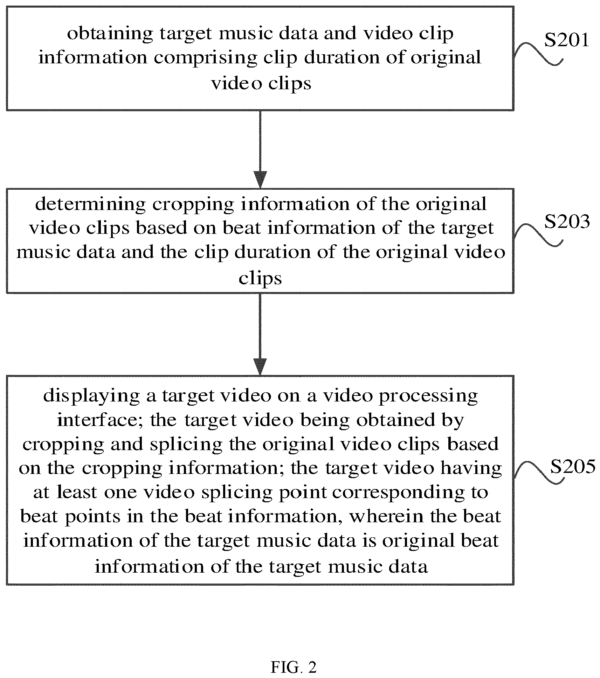

FIG. 2 is a flowchart of a method for processing a video according to some embodiments of the disclosure. As illustrated in FIG. 2, the method for processing the video is suitable for electronic devices such as servers, terminals and other nodes. The method includes S201, S203 and S205.

In S201, target music data and video clip information are obtained, in which the video clip information includes clip duration of original video clips in a set of video clips.

In some embodiments, when the terminal device launches an application based on an application launch instruction of the user and switches to a video processing interface, it may display selectable music data on a display interface, for example, display selectable music names on the display interface. Each piece of the selectable music data may be referred to by a name of music. Or, each piece of the selectable music data may be referred to by a name of music and a cover of music. The music data includes a music file or a music data packet or the other data for presenting the digital form of the music.

In some embodiments, the terminal device may obtain the target music data in response to a music selection instruction. In detail, when the terminal device detects that there is a touch on an interface region corresponding to the target music data, the target music data may be obtained. Or, when an audio input module of the terminal device receives an identifier of the target music data, the target music data may be obtained. The identifier may be the music name of the target music data. In some embodiments, in a case that the target music data has been selected before, the target music data is stored in a local storage of the terminal device. Therefore, the terminal device may extract the target music data from the local storage. When the target music data has not been selected by the user, the terminal device may establish a link with the server, download the target music data from the server and store the target music data in the local storage.

In some embodiments, the target music data may be a complete song file or a repetitive combination file of a certain clip of a song.

In some embodiments, the video clip information includes the clip duration of each original video clip in the set of video clips. In detail, the set of video clips includes a plurality of original video clips uploaded by the user, in which the clip duration of each original video clip may be the same or different.

Optionally, the above-mentioned original video clips may be directly photographed by the user or may be obtained by splicing different pictures.

In S203, cropping information of the original video clips is determined based on beat information of the target music data and the clip duration of the original video clips.

Before S203, the disclosure also provides some embodiments for determining the beat information of the target music data. There are many implementations to determine the beat information of the target music data and two implementations are introduced below.

In an implementation, after obtaining the target music data, the terminal device may perform beat analysis on the target music data to obtain the beat information of the target music data. In detail, the music beat analysis model may be directly invoked to perform real-time analysis on the target music data to obtain the beat information of the target music data.

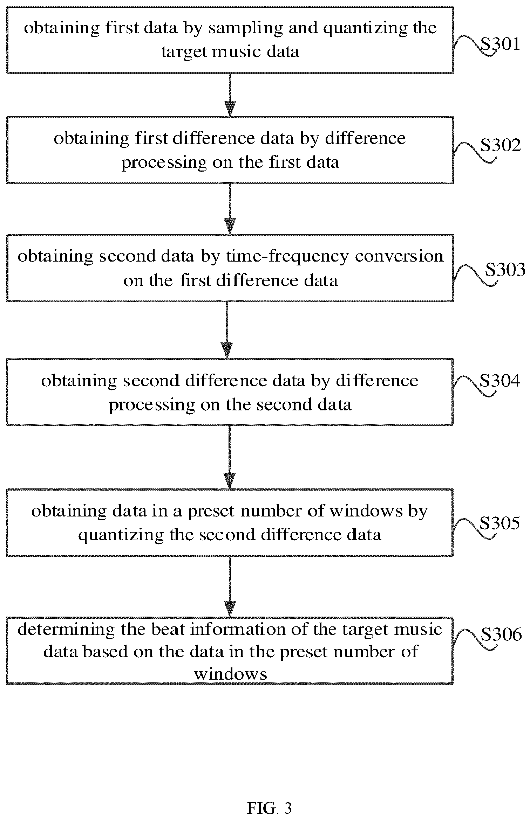

In another implementation, algorithm processing may be performed directly on the music target file to obtain the beat information of the target music data. FIG. 3 is a flowchart of determining beat information according to some embodiments of the disclosure. As illustrated in FIG. 3, determining beat information includes S301-S306.

In S301, first data are obtained by sampling and quantizing the target music data.

In some embodiments, the terminal device may sample the target music data. For example, 1024 sampling points are obtained after each sampling and 1024 sampling points may be understood as data points within one window. The terminal device may quantize 1024 sampling points subsequently.

The sampling and quantizing may include first obtaining a new input stream, performing waveform decoding processing on the new input stream, performing floating-point sampling on the processed input stream to obtain 1024 sampling points and performing quantizing on the sampling points. In this way, the first data processed may be obtained.

In S302, first difference data are obtained by difference processing on the first data.

In detail, the terminal device may subtract previous window data from current window data to obtain difference data. The difference formula may be as a formula (1):

$$SF(k) = \sum_{i=0}^{n-1} s(k,i) - s(k-1,i) \qquad (1).$$

In S303, second data are obtained by time-frequency conversion on the first difference data.

To facilitate subsequent processing, the terminal device may perform time-frequency conversion on the above-mentioned difference data to obtain the second data. The time-frequency conversion is realized based on Fourier transformation.

In S304, second difference data are obtained by difference processing on the second data.

The audio rhythm may basically be seen from the data processed through Fourier transformation and difference processing.

In S305, data in a preset number of windows are obtained by quantizing the second difference data.

In some optional embodiments, the quantizing may use a moving average method. The general sampling rate of audio is 44100 or 48000. 44100 may be taken as an example herein.

According to the above content, the disclosure sets the size of the window to 1024. Therefore, the number of whole windows in 1 second is 43 and duration represented by one window is 1000/ (44100/ 1024) = 23.22 milliseconds. When the average value is calculated in an interval of 0.5 seconds, the required windows may be about 22. Optionally, the first 10 windows and the last 10 windows may be taken to calculate the average value. In this way, the results of 10 windows may be obtained.

In S306, the beat information of the target music data is determined based on the data in the preset number of windows.

In some embodiments, the above-mentioned determination of the beat information of the target music data based on the data in the preset number of windows may be determined by peak detection.

In this way, the beat information of the target music data is determined through S31-S36.

In some embodiments, the terminal device obtains the beat information of the target music data from a beat information storage area based on identification information of the target music data.

In some embodiments, the terminal device sends a music obtaining request to a server, in which the music obtaining request includes the identification information of the target music data. Correspondingly, after receiving the music obtaining request from the terminal device, the server extracts the identification information of the target music data, obtains the beat information of the target music data from the beat information storage area based on the identification information, and sends the beat information of the target music data to the terminal device. At this time, the terminal device receives the beat information of the target music data from the server. Optionally, the beat information of the target music data is obtained by the server performing beat analysis on the target music data.

Optionally, beat information of all music data in the storage area may be determined based on the above two embodiments. Beat information of each piece of music data in all the music data is marked with the identification information of the piece of music data.

In this way, compared with the implementation of extracting the beat information from the storage space, the implementation of calculating the beat information of the target music data in real time may save a large amount of storage space. Compared with the implementation of calculating the beat information of the target music data in real time, the implementation of extracting the beat information from the storage space may reduce the processing time of the entire solution and speed up the processing process.

In some embodiments, for each original video clip, the terminal device determines a cropping range of the original video clip based on the clip duration of the original video clip. After determining the cropping range of each original video clip, the terminal device obtains positions of all video frames within the cropping range of the original video clip, determines the cropping information of the original video clip based on the positions of all the video frames and the beat points, and crops the original video clip based on the cropping information.

For example, it is assumed that there is an original video clip with duration of 10 seconds. It may be determined that a cropping range of this original video clip is between the 5th second and the 8th second and the terminal device obtains positions of all video frames in the original video clip from the 5th second to the 8th second. If it is finally determined that 2 seconds of content needs to be cropped out from this original video clip, an end point of the cropped original video clip may be matched with the music. The terminal device determines a beat point from the 5th second to the 8th second, determines 2 seconds of content from the 5th second to the 8th second based on the positions of all the video frames and the beat points as the cropping information, and crops the original video clip based on the cropping information.

In some implementations of determining the cropping information of the original video clip based on the positions of all the video frames and the beat points, if there are positions of video frames corresponding to the beat points within the cropping range, for example, between the 5th second and the 8th second, (5th, 5.5th, 6th, 6.5th, 7th, 7.5th and 8th all have corresponding beat points), the terminal device performs quality analysis on the video frames within the cropping range to determine the target video frame.

Optionally, the terminal device performs quality analysis on each video frame between the 5th second and the 8th second and determines the target video frame, which may be an optimal video frame or the top video frames for quality. In this way, the terminal device determines the cropping information of the original video clip based on a position of the target video frame. Continuing with the above example, for example, if the terminal device determines that the 7th second, 7.5th second and the 8th second are the optimal video frames, the determined cropping information may be from the 5th second to the 7th second. Then, the terminal device crops the original video clip based on the cropping information. Alternatively, the terminal device also starts cropping from the next frame of the optimal video frame and determines cropping information up to 2 seconds. Alternatively, the terminal device crops forward from the previous frame of the optimal video frame and determines the cropping information up to 2 seconds. Optionally, the 2-second cropping duration may be continuous or may be small clips for cropping for a total of 2 seconds.

In some embodiments, the cropping range of the original video clip is determined based on a key clip of the original video clip, in which the key clip is determined based on a fascinating degree value of video frames. For example, the key clip in the cropping range is a clip with the lower fascinating degree value.

In some other embodiments, the cropping range of the original video clip is determined based on cropping indication information, in which the cropping indication information is generated based on user setting information.

In this way, in the process of cropping the video in some embodiments of the disclosure, video frames with relatively high quality may be reserved.

In some embodiments, the clip duration of the original video clips, obtained by the terminal device, may be long or short. If the original video clip with short clip duration needs to be cropped, the content of the original video clip may not be well expressed. Based on this, in some embodiments, the terminal device may first determine a cropping duration threshold and determine the first target video clip from the original video clips, where the clip duration of the first target video clip is less than or equal to the cropping duration threshold.

The above-mentioned cropping duration threshold refers to a critical value (for example, 2 seconds). If clip duration of an original video clip is less than or equal to the critical value, the original video clip may not be cropped. This is because if the original video clip smaller than the critical value is cropped, the content of the original video clip may not be well expressed. Therefore, the original video clip whose clip duration is less than or equal to the cropping duration threshold may be directly determined as the first target video clip, which is directly used to be spliced into the target video.

In some embodiments, the above-mentioned cropping duration threshold (for example, 2 seconds) may be set based on an empirical value.

In some other embodiments, the terminal device may determine the cropping duration threshold based on clip duration of video clips in target historical videos that satisfy requirements. In detail, the terminal device obtains a set of historical videos and determines the target historical videos that satisfy the requirements from the set of historical videos based on video attribute information, where the video attribute information includes at least one of: a number of reposts, a number of views, a number of likes, a number of rewards, a number of fans and a number of comments. The cropping duration threshold is obtained by analyzing the clip duration of the video clips in the target historical videos.

In some embodiments, after obtaining the set of historical videos, the terminal device may determine the number of reposts, the number of views, the number of likes, the number of rewards, the number of fans and the number of comments, of each historical video in the set of historical videos. The terminal device may determine the historical video whose number of reposts satisfying a first number, whose number of views satisfying a second number, whose number of likes satisfying a third number, whose number of rewards satisfying a fourth number, whose number of fans satisfying a fifth number and whose number of comments satisfying a sixth number as the target historical video. The first number, the second number, the third number, the fourth number, the fifth number and the sixth number may be preset. The determined target historical video is analyzed to obtain a number of video clips contained in each historical video and the clip duration of each video clip, and the cropping duration threshold is determined based on the clip duration of each video clip. Optionally, the above-mentioned historical video is a historical video that its author finally uploads to the server through the terminal device, and each video clip of the historical video may carry duration information of the video clip.

In the above manner, popular target historical videos that satisfy the requirements may be determined under the investigation based on big data, and a scientific cropping duration threshold may be determined based on the target historical videos, which provides scientific and effective data support for the cropping duration threshold.

In some other embodiments, the terminal device may determine the cropping duration threshold based on the clip duration of the original video clips. For example, it is assumed that there are 3 original video clips, the clip duration of original video clip 1 is 3 seconds, the clip duration of original video clip 2 is 10 seconds, and the clip duration of original video clip 3 is 20 seconds. Since the duration of the original video clip 1, the original video clip 2, and the original video clip 3 are quite different, the clip duration of the original video clip 1 may be directly set as the cropping duration threshold. The above example is only an optional embodiment of determining the cropping duration threshold based on the clip duration of the original video clips, and other embodiments may also be included in the disclosure.

In the above manner, the cropping duration threshold may be determined based on the actual clip duration of each original video clip, which is closer to the current original video clip to be processed.

In some other embodiments, the terminal device may determine the cropping duration threshold based on clip duration of video clips in target historical videos that satisfy requirements and the clip duration of the original video clips. In detail, the first cropping duration threshold may be determined based on clip duration of video clips in target historical videos that satisfy requirements. The second cropping duration threshold may be determined based on the clip duration of the original video clips. The cropping duration threshold may be determined based on the first cropping duration threshold and the second cropping duration threshold. In detail, the final cropping duration threshold may be determined based on an average value of the first cropping duration threshold and the second cropping duration threshold, or may be determined based on a sum of a product of the first cropping duration threshold and a first coefficient and a product of the second cropping duration threshold and a second coefficient.

In some embodiments, if the first target video clip does not exist in the original video clips, the cropping information of each original video clip may be directly determined based on the beat information of the target music data and the clip duration of the original video clips. Optionally, if the first target video clip exists in the original video clips, the cropping information of original video clip(s) other than the first target video clip is determined based on the beat information of the target music data and the clip duration of the original video clips. Optionally, the terminal device may directly determine the cropping information of each original video clip based on based on the beat information of the target music data and the clip duration of the original video clips regardless of the cropping duration threshold.

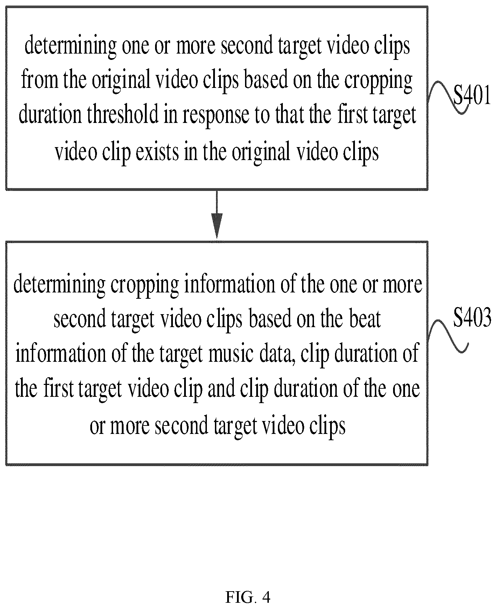

The following describes how to determine the cropping information of the original video clip based on some embodiments. FIG. 4 is a flowchart of determining cropping information according to some embodiments of the disclosure. As illustrated in FIG. 4, it includes S401 and S403.

In S401, one or more second target video clips are determined from the original video clips based on the cropping duration threshold in response to that the first target video clip exists in the original video clips.

If the first target video clip exists in the original video clips, the original video clip(s) other than the first target video clip may be determined as the second target video clip(s).

In S403, cropping information of the one or more second target video clips is determined based on the beat information of the target music data, clip duration of the first target video clip and clip duration of the one or more second target video clips.

In some embodiments, the beat information may include beat duration. The beat duration may refer to a period of time occupied by each beat in the target music data. Every music has its own speed. Generally speaking, the speed of most music is constant. Therefore, most music has one beat duration. In music, time is divided into equal basic units and each unit is called one "beat". The duration of the beat is represented by duration of notes. The duration of one beat may be a quarter note (that is, a quarter note is one beat), a half note (that is, a half note is one beat) or an eighth note (that is, an eighth note is one beat). The duration of the beat is a relative concept of time. For example, when the specified speed of a music is 60 beats per minute, the duration occupied by each beat is one second and the duration of one-half of one beat is one-half of one second; when the specified speed of a music is 120 beats per minute, the duration occupied by each beat is one-half of one second and the duration of one-half of one beat is a quarter of a second, and so on. After the duration of the beat is determined, notes of various duration are associated with beats. Of course, there are also some music that has a variable speed. Therefore, there is beat duration of this type of music.

The following description takes the beat information of the target music data as single beat duration as an example. It is assumed that the cropping duration threshold is 2 seconds, the single beat duration is 3 seconds, and there are a first target video clip with duration of 2 seconds and a second target video clip with duration of 11 seconds in the original video clips. According to the above content, the terminal device may not crop the first target video clip.

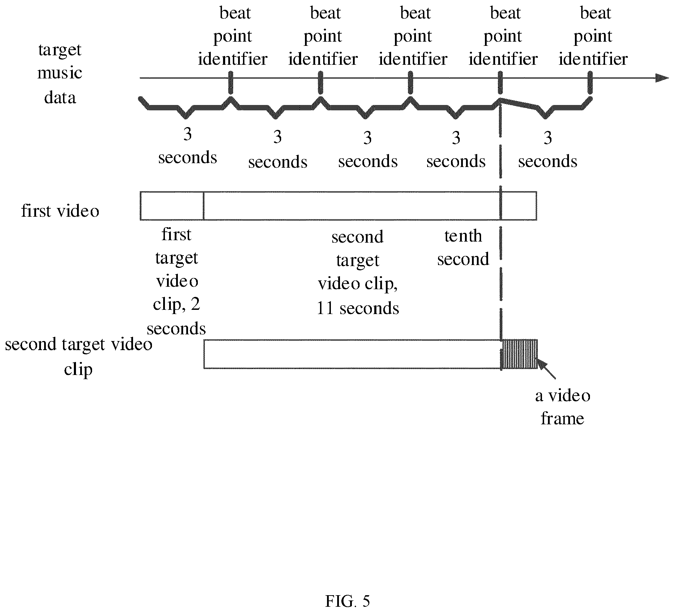

Optionally, FIG. 5 is a schematic diagram illustrating a first video after splicing according to some embodiments of the disclosure. As illustrated in FIG. 5, the beat information includes a single beat duration (3 seconds), and the beat information includes beat points of the target music data. In other words, a beat point may be marked on the target music data every 3 seconds. The first target video clip of 2 seconds is a video clip with a splicing serial number of 1, and the second target video clip of 11 seconds is a video clip with a splicing serial number of 2. The first target video clip and the second target video clip may be spliced to obtain the first video based on the serial splicing number 1 and the serial splicing number 2, in which the first video is a first video. The duration of the first video is the sum of the clip duration of the first target video clip and the clip duration of the second target video clip. In this way, a total of 13 seconds of the first video may be obtained after the splicing of the first target video clip in the front and the second target video clip in the back. Subsequently, cropping information of the second target video clip may be determined based on the beat point and the preset processing direction. Since there is one second target video clip in the displayed example, if there are multiple second target video clips, the cropping information of the multiple second target video clips may be determined at one time. In this way, the splicing point between different video clips may be made to be matching on the beat point of the target music data as much as possible, so as to realize the music matching effect.

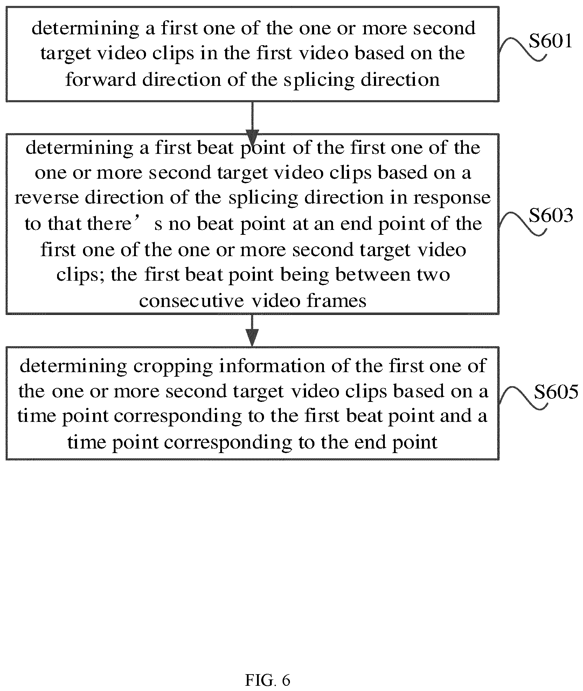

The following description will be given by taking a forward direction of a splicing direction as an example, in which the forward direction of the splicing direction is a front-to-back direction. FIG. 6 is a flowchart of determining cropping information of a second target video clip according to some embodiments of the disclosure. As illustrated in FIG. 6, it includes S601, S603 and S605.

In S601, a first one of the one or more second target video clips in the first video is determined based on the forward direction of the splicing direction.

Optionally, based on the first video in FIG. 5, the forward direction of the splicing direction is from front to back, that is, the direction from the first target video clip to the second target video clip. Since there is one second target video clip in the example, the second target video clip is directly determined as the first one of the one or more second target video clips.

In S603, a first beat point of the first one of the one or more second target video clips, is determined based on a reverse direction of the splicing direction in response to that there's no beat point at an end point of the first one of the one or more second target video clips; the first beat point being between two consecutive video frames.

As illustrated in FIG. 5, the end point of the first one of the one or more second target video clips, is at the 13th second, and the target music data does not have a corresponding beat point at the 13th second. The first beat point may be determined based on the reverse direction of the splicing direction, that is, the first beat point is determined based on the direction from the second target video clip to the first target video clip. The first beat point is the fourth beat point from left to right in FIG. 5.

The time of the first video corresponding to the beat point is the 12th second. For the second target video clip, the time of the second target video clip corresponding to the fourth beat point is the 10th second. The second target video clip is matching on the 10th second.

In some embodiments, as illustrated in FIG. 5, the second target video clip includes multiple video frames. For example, the 10th second to the 11th second may include multiple video frames, and the number of video frames included in FIG. 5 is just an example.

To ensure the integrity of the cropped video frames or the integrity of the remaining video frames, the first beat point may be located between two consecutive video frames.

In S605, cropping information of the first one of the one or more second target video clips, is determined based on a time point corresponding to the first beat point and a time point corresponding to the end point.

Optionally, the terminal device may determine, based on the end point of the second target video clip, i.e., the 13th second, and the time corresponding to the fourth beat point, i.e., the 12th second, the cropping information of the second target video clip at the first cropping position as 1-second sub-clip that needs to be cropped from the second target video clip.

In this way, the splicing point between different video clips may be made to be matching on the beat point of the target music data as much as possible, to realize the music matching effect.

The above example illustrates the content that the preset processing direction is the forward direction of the splicing direction, but the preset processing direction may also be the reverse direction of the splicing direction.

In some embodiments, the cropping information includes a cropping duration. The terminal device may determine a cropping duration to be cropped, of the first one of the one or more second target video clips, based on a difference between the time point corresponding to the first beat point and the time point corresponding to the end point. That is, the cropping information of the first one of the one or more second target video clips, is a sub-clip of 1 second that needs to be cropped out from the second target video clip. Based on this, the terminal device may crop the second target video clip located at the first cropping position based on a preset cropping manner and the cropping duration, thereby obtaining a cropped second target video clip of 10 seconds. Optionally, the preset cropping manner is a manner of cropping from a head of the clip (for example, cropping the clip of the first second of the second target video clip at the first cropping position), or a manner of cropping from an end of the clip (for example, cropping the clip of the last second of the second target video clip at the first cropping position), or a manner of cropping from a middle of the clip (for example, cropping off any second of the second target video clip at the first cropping position), or cropping based on content quality of the clip. In this way, embodiments of the disclosure provide users with more cropping options, thereby realizing the diversity of video processing.

There may be multiple implementations to crop the second target video clip located at the first cropping position by the manner of cropping based on content quality of the clip, and two implementations are described below.

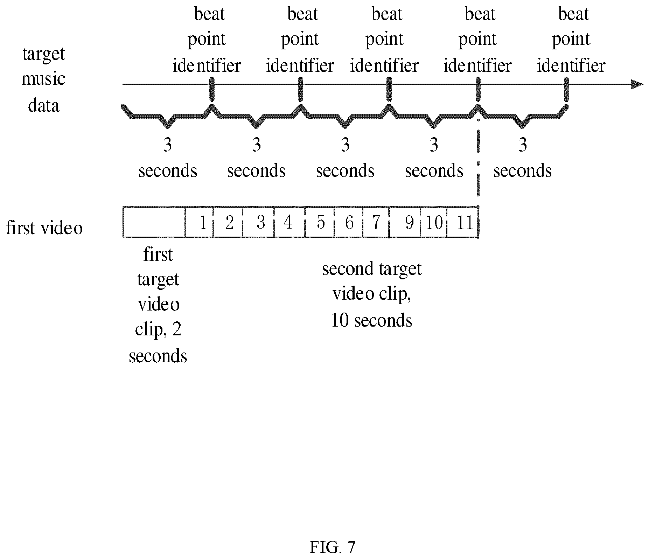

In a first implementation, the terminal device may segment the first one of the one or more second target video clips into sub-clips at the first cropping position; total duration of the sub-clips being equal to clip duration of the first one of the one or more second target video clips. For example, the 11-second second target video clip may be segmented into 11 sub-clips, and each sub-clip is 1 second. Subsequently, content quality of each of the sub-clips may be evaluated based on a quality evaluation parameter to obtain a content quality value of each of the sub-clips. A sub-clip that does not satisfy quality requirements is cropped out from the sub-clips based on the content quality value of each of the sub-clips and the cropping duration. It is assumed that the 8th sub-clip has the lowest content quality value, the 8th sub-clip may be cropped out from the second target video clip. In this way, a schematic diagram of the cropped second target video clip as illustrated in FIG. 7 may be obtained.

The quality evaluation parameter includes color saturation, sharpness, richness of content and brightness.

In a second implementation, the terminal device may segment the first one of the one or more second target video clips into sub-clips at the first cropping position; total duration of the sub-clips being greater than clip duration of the first one of the one or more second target video clips, in which there are duplicate clips in each sub-clip and an adjacent sub-clip. For example, the 11-second second target video clip may be segmented into 5 sub-clips, each sub-clip is 3 seconds, and the 5 sub-clips include sub-clip 1 from seconds 0 to 3, sub-clip 2 from seconds 2 to 5, sub-clip 3 for seconds 4 to 7, sub-clip 4 for seconds 6 to 9 and sub-clip 5 for seconds 8 to 11. Then, content quality of each of the sub-clips may be evaluated based on a quality evaluation parameter to obtain a content quality value of each of the sub-clips. A sub-clip that does not satisfy quality requirements is cropped out from the sub-clips based on the content quality value of each of the sub-clips and the cropping duration (for example, sub-clip 4). Then, the remaining sub-clips may be spliced and integrated to obtain the clip that is cropped out is a clip from the 7th second to the 8th second.

The quality evaluation parameter includes color saturation, sharpness, richness of content, brightness and/or degree of coherence. Compared with the first implementation, there may be repeated parts in two adjacent sub-clips, and while taking into account color saturation, sharpness, richness of content and brightness, the degree of coherence of the cropped second target video may also be guaranteed. Each sub-clip in the above two implementations may also be a video frame or multiple video frames, and the video frame in each sub-clip is a complete video frame.

In S205, a target video is displayed on a video processing interface; the target video being obtained by cropping and splicing the original video clips based on the cropping information; the target video having at least one video splicing point corresponding to beat points in the beat information, in which the beat information of the target music data is original beat information of the target music data.

Continuing to describe based on the example, S205 may be expressed as that: the terminal device performs a first splicing adjustment on the first video based on the cropped first one of the one or more second target video clips. As illustrated in FIG. 7, after cropping the second target video clip, a 10-second second target video clip may be obtained by splicing the 7th sub-clip and the 9th sub-clip.

If there is a second one of the one or more second target video clips, the second one of the one or more second target video clips, is determined based on the first video after the first splicing adjustment. The second one of the one or more second target video clips, is cropped based on a cropping manner of the first one of the one or more second target video clips. A second splicing adjustment is performed on the first video based on the cropped second one of the one or more second target video clips, until a cropping process of a last one of the one or more second target video clips is completed. In this way, the target video after cropping and splicing may be displayed on the video processing interface, and the target video is obtained after multiple cycles of cropping and splicing of the first video.

It is assumed that there are three second target video clips (a first one of the one or more second target video clips, a second one of the one or more second target video clips, and a third one of the one or more second target video clips) in the first video. The terminal device may crop the first one of the one or more second target video clips based on the cropping manner described above, and perform a first splicing adjustment on the first video based on the cropped first one of the one or more second target video clips. Subsequently, the terminal device performs cropping processing on the second one of the one or more second target video clips based on the cropping manner of the first one of the one or more second target video clips, and performs a second splicing adjustment on the first video based on the cropped second one of the one or more second target video clips. Next, the terminal device may perform cropping processing on the third one of the one or more second target video clips based on the cropping manner of the second one of the one or more second target video clips, and perform a third splicing adjustment on the first video based on the cropped third one of the one or more second target video clips. After adjustment, the first video thus obtained may be the final target video.

In this way, the first video may be cropped orderly and smoothly, so that the splicing point between different video clips is just matching on the beat point of the target music data, so as to realize the music matching effect.

In some embodiments, an import duration threshold for importing into the terminal device may be preset. When the clip duration of each original video clip in the set of video clips is greater than or equal to the import duration threshold, it is determined that each original video clip is the third target video clip. In the case where the beat duration in the beat information is a single duration, the cropping information of each third target video clip is determined based on the beat duration and the clip duration of each original video clip, so that the clip duration of each third target video clip obtained based on the cropping information is an integer multiple of the beat duration. The import duration threshold is greater than or equal to the beat duration.

In some embodiments, the beat information further includes a beat speed, and the terminal device determines transition effect information corresponding to the beat speed; and adds the transition effect information at the at least one video splicing point corresponding to the beat points. In detail, the terminal device may match a transition suitable for the music style based on the beat speed, such as a fast-paced music with a transition with a larger animation range, for example rotation, fast cut, and so on.

In some embodiments, the terminal device determines downbeat level values of beat point corresponding to the beat points; determines a key beat point where the downbeat level value satisfies a preset level value; and adds downbeat effect information at a video splicing point corresponding to the key beat point. In detail, effects such as screen jitter or RGB separation may be added to a certain beat point to create an industrial cool look. In this way, the final production effect may be presented on the video processing interface.

Optionally, the terminal device may also receive an adjustment instruction triggered based on an adjustment control, adjust the transition effect information or the downbeat effect information, and replace it with new transition effect information or downbeat effect information that the user likes.

In some embodiments, duration of the target video finally displayed on the video processing interface is the same as duration of the target music data. Alternatively, duration of the target music data is greater than duration of the target video, and the terminal device may crop the duration of the target music data according to the duration of the target video. In this way, it may be obtained that the duration of the target video is the same as the duration of the cropped target music data.

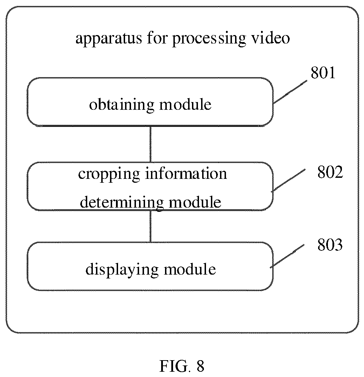

FIG. 8 is a block diagram of an apparatus for processing a video according to some embodiments of the disclosure. As illustrated in FIG. 8, the apparatus includes an obtaining module 801, a cropping information determining module 802 and a displaying module 803.

The obtaining module 801 is configured to obtain target music data and video clip information; the video clip information including clip duration of original video clips in a set of video clips.

The cropping information determining module 802 is configured to determine cropping information of the original video clips based on beat information of the target music data and the clip duration of the original video clips.

The displaying module 803 is configured to display a target video on a video processing interface; the target video being obtained by cropping and splicing the original video clips based on the cropping information; the target video having at least one video splicing point corresponding to beat points in the beat information, in which the beat information of the target music data is original beat information of the target music data.

In some embodiments, the apparatus further includes a beat information obtaining module configured to: obtain the beat information of the target music data by beat analysis on the target music data; or, obtain the beat information of the target music data from a beat information storage area based on identification information of the target music data.

In some embodiments, the beat information obtaining module is configured to: send a music obtaining request to a server, the music obtaining request including the identification information of the target music data; and receive the beat information of the target music data from the server; the beat information of the target music data being obtained by the server performing beat analysis on the target music data, and the beat information of the target music data being stored in the beat information storage area of the server.

In some embodiments, the cropping information determining module is configured to: for each original video clip, determine a cropping range of the original video clip based on the clip duration of the original video clip; obtain positions of all video frames within the cropping range of the original video clip; and determine the cropping information of the original video clip based on the positions of all the video frames and the beat points.

In some embodiments, the cropping information determining module is configured to: obtain a target video frame by quality analysis on the video frames within the cropping range in response to that there're multiple positions of video frames corresponding to the beat points within the cropping range; and determine the cropping information of the original video clip based on a position of the target video frame.

In some embodiments, the apparatus is configured to: determine the cropping range of the original video clip based on a key clip of the original video clip, the key clip being determined based on a fascinating degree value of video frames; and/or; determine the cropping range of the original video clip based on cropping indication information, the cropping indication information being generated based on user setting information.

In some embodiments, the apparatus further includes a target video clip determining module configured to: determine a first target video clip from the original video clips; clip duration of the first target video clip being less than or equal to a cropping duration threshold.

In some embodiments, the apparatus further includes a cropping duration threshold module configured to: determine the cropping duration threshold based on clip duration of video clips in target historical videos that satisfy requirements, and/or, determine the cropping duration threshold based on the clip duration of the original video clips.

In some embodiments, the cropping duration threshold module is configured to: obtain a set of historical videos; determine the target historical videos that satisfy the requirements from the set of historical videos based on video attribute information, where the video attribute information includes at least one of: a number of reposts, a number of views, a number of likes, a number of rewards, a number of fans and a number of comments; and obtain the cropping duration threshold by analyzing the clip duration of the video clips in the target historical videos.

In some embodiments, the cropping information determining module is configured to, in response to the first target video clip exists in the original video clips: determine one or more second target video clips from the original video clips based on the cropping duration threshold; and determine cropping information of the one or more second target video clips based on the beat information of the target music data, clip duration of the first target video clip and clip duration of the one or more second target video clips.

In some embodiments, the cropping information determining module is configured to: obtain a first video by splicing the first target video clip and the one or more second target video clips based on a splicing serial number of the first target video clip and one or more splicing serial numbers of the one or more second target video clips, in which the first video is a first video; duration of the first video is a sum of the clip duration of the first target video clip and the clip duration of the one or more second target video clips; and determine sequentially the cropping information of the one or more second target video clips based on the beat points in the beat information and a preset processing direction.

In some embodiments, the preset processing direction includes a forward direction of a splicing direction, and the cropping information determining module is configured to: determine a first one of the one or more second target video clips in the first video based on the forward direction of the splicing direction; determine a first beat point of the first one of the one or more second target video clips based on a reverse direction of the splicing direction in response to that there's no beat point at an end point of the first one of the one or more second target video clips; the first beat point being between two consecutive video frames; and determine cropping information of the first one of the one or more second target video clips based on a time point corresponding to the first beat point and a time point corresponding to the end point.

In some embodiments, the cropping information includes a cropping duration, and the cropping information determining module is configured to: determine a cropping duration to be cropped, of the first one of the one or more second target video clips, based on a difference between the time point corresponding to the first beat point and the time point corresponding to the end point; and crop the first one of the one or more second target video clips based on a preset cropping manner and the cropping duration; the preset cropping manner includes cropping from a head of the clip, cropping from an end of the clip, cropping from a middle of the clip and cropping based on content quality of the clip.

In some embodiments, the cropping information determining module is configured to, in response to cropping based on content quality of the clip: segment the first one of the one or more second target video clips into sub-clips; total duration of the sub-clips being equal to clip duration of the first one of the one or more second target video clips; obtain a content quality value of each of the sub-clips by a content quality assessment on each of the sub-clips based on a quality assessment parameter; and crop out a sub-clip that does not satisfy quality requirements from the sub-clips based on the content quality value of each of the sub-clips and the cropping duration; the quality evaluation parameter includes color saturation, sharpness, richness of content and brightness.

In some embodiments, the cropping information determining module is configured to, in response to cropping based on content quality of the clip: segment the first one of the one or more second target video clips into sub-clips; total duration of the sub-clips being greater than to clip duration of the first one of the one or more second target video clips, in which there's repeated clip in each sub-clip and adjacent sub-clip; obtain a content quality value of each of the sub-clips by a content quality assessment on each of the sub-clips based on a quality assessment parameter; and crop out a sub-clip that does not satisfy quality requirements from the sub-clips based on the content quality value of each of the sub-clips and the cropping duration; the quality evaluation parameter includes color saturation, sharpness, richness of content, brightness and/or degree of coherence.

In some embodiments, the displaying module is configured to: perform a first splicing adjustment on the first video based on the cropped first one of the one or more second target video clips; determine a second one of the one or more second target video clips based on the first video after the first splicing adjustment, and crop the second one of the one or more second target video clips based on a cropping manner of the first one of the one or more second target video clips; perform a second splicing adjustment on the first video based on the cropped second one of the one or more second target video clips, until a cropping process of a last one of the one or more second target video clips is completed; display the target video on the video processing interface, where the target video is obtained after cycles of cropping and splicing of the first video.

In some embodiments, the beat information further includes a beat speed, and the apparatus further includes a transition effect adding module configured to: determine transition effect information corresponding to the beat speed; and add the transition effect information at the at least one video splicing point corresponding to the beat points.

In some embodiments, the apparatus further includes a downbeat effect adding module configured to: determine downbeat level values corresponding to the beat points; determine a key beat point where the downbeat level value satisfies a preset level value; and add downbeat effect information at a video splicing point corresponding to the key beat point.

In some embodiments, duration of the target video is the same as duration of the target music data; or; duration of the target video is the same as duration of a clipped target music data.

With respect to the apparatuses in the above embodiments, the specific manners for performing operations for individual modules therein have been described in detail in the embodiments regarding the methods, which will not be elaborated herein.

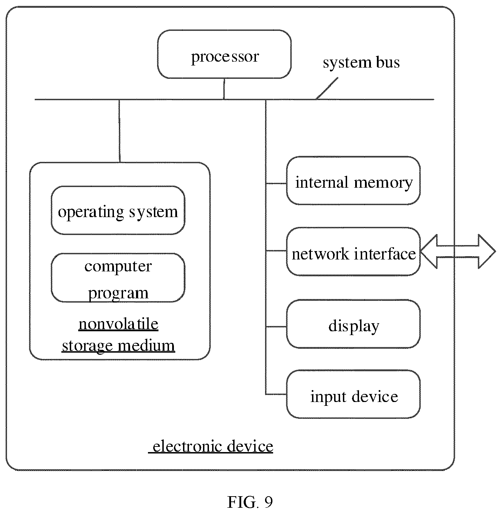

FIG. 9 is a block diagram of an electronic device for processing a video according to some embodiments of the disclosure.

The electronic device may be a server or other device with the same function as the server, the internal structure diagram of which may be as illustrated in FIG. 9. The electronic device includes a processor, a memory and a network interface, connected through a system bus. The processor of the electronic device is configured to provide calculation and control capabilities. The memory of the electronic device includes a nonvolatile storage medium and an internal memory. The nonvolatile storage medium stores an operating system and a computer program. The network interface of the electronic device is configured to communicate with an external terminal through a network connection. The computer program is executed by the processor to realize the method for processing the video.

Those skilled in the art may understand that the structure in FIG. 9 is only a block diagram of a part of the structure related to the solutions of the disclosure and may not constitute a limitation on the electronic device to which the solutions of the disclosure is applied. The specific electronic device may include more or less parts than shown in the figure or combine some parts or has a different arrangement of parts.

In some embodiments, a service is provided. The service includes a processor; and a memory for storing instructions executable by the processor. The processor is configured to execute the instructions to perform the method for processing the video.

In some embodiments, a storage medium is provided. When instructions in the storage medium are executed by a processor of an electronic device, the electronic device is caused to perform the method for processing the video.

In some embodiments, a computer program product is provided. When the computer program product is running on a computer, the computer performs the method for processing the video.

Those skilled in the art may understand that all or part of processes in the above-mentioned embodiment methods may be implemented by instructing relevant hardware through a computer program. The computer program may be stored in a nonvolatile computer-readable storage medium. When the computer program is executed, it may include procedures of the above-mentioned method embodiments. Any reference to the memory, storage, database or other media used in the embodiments provided in the disclosure may include a nonvolatile and/or volatile memory. The nonvolatile memory may include a read only memory (ROM), a programmable ROM (PROM), an electrically programmable ROM (EPROM), an electrically erasable programmable ROM (EEPROM) or a flash memory. The volatile memory may include a random access memory (RAM) or an external cache memory. As an illustration and not a limitation, RAM is available in many forms, such as static RAM (SRAM), dynamic RAM (DRAM), synchronous DRAM (SDRAM), double data rate SDRAM (DDRSDRAM), enhanced SDRAM (ESDRAM), synchlink DRAM (SLDRAM), memory bus (Rambus) direct RAM (RDRAM), direct memory bus dynamic RAM (DRDRAM), memory bus dynamic RAM (RDRAM), etc.

Those skilled in the art will easily think of other embodiments of the disclosure after considering the specification and practicing the disclosure disclosed herein. The disclosure is intended to cover any variations, uses or adaptive changes of the disclosure. These variations, uses or adaptive changes follow the general principles of the disclosure and include common knowledge or conventional technical means in the technical field that are not disclosed in the disclosure. The description and the embodiments are to be regarded as exemplary only and the true scope and spirit of the disclosure are pointed out by the following claims.

It will be appreciated that the disclosure is not limited to the exact construction that has been described above and illustrated in the accompanying drawings, and that various modifications and changes may be made without departing from the scope thereof. It is intended that the scope of the disclosure only be limited by the appended claims.

**Claims**

1.  A method for processing a video, comprising:

    obtaining (S201) target music data and video clip information comprising clip duration of original video clips;
    determining (S203) cropping information of the original video clips based on beat information of the target music data and the clip duration of the original video clips; and
    displaying (S205) a target video on a video processing interface; the target video being obtained by cropping and splicing the original video clips based on the cropping information; the target video having at least one video splicing point corresponding to beat points in the beat information, wherein the beat information of the target music data is original beat information of the target music data.

2.  The method as claimed in claim 1, further comprising:

    obtaining the beat information of the target music data by beat analysis on the target music data; or,
    obtaining the beat information of the target music data from a beat information storage area based on identification information of the target music data, comprising:

        sending a music obtaining request to a server, the music obtaining request comprising the identification information of the target music data; and
        receiving the beat information of the target music data from the server; the beat information of the target music data being obtained by the server performing beat analysis on the target music data, and the beat information of the target music data being stored in the beat information storage area of the server.

3.  The method as claimed in claim 1 or 2, wherein, said determining (S203) the cropping information of the original video clips based on the beat information of the target music data and the clip duration of the original video clips, comprises:

    for each original video clip, determining a cropping range of the original video clip based on the clip duration of the original video clip;
    obtaining positions of all video frames within the cropping range of the original video clip; and
    determining the cropping information of the original video clip based on the positions of all the video frames and the beat points,

wherein, said determining the cropping information of the original video clip based on the positions of all the video frames and the beat points, comprises:

obtaining a target video frame by quality analysis on the video frames within the cropping range in response to that there're multiple positions of video frames corresponding to the beat points within the cropping range; and

determining the cropping information of the original video clip based on a position of the target video frame.

4. The method as claimed in claim 3, further comprising:

determining the cropping range of the original video clip based on a key clip of the original video clip, the key clip being determined based on a fascinating degree value of video frames; and/or;

determining the cropping range of the original video clip based on cropping indication information, the cropping indication information being generated based on user setting information.

5. The method as claimed in any one of claims 1 to 4, further comprising:
determining a first target video clip from the original video clips; clip duration of the first target video clip being less than or equal to a cropping duration threshold.

6. The method as claimed in claim 5, further comprising:

determining the cropping duration threshold based on clip duration of video clips in target historical videos that satisfy requirements, and/or, determining the cropping duration threshold based on the clip duration of the original video clips,

wherein, said determining the cropping duration threshold based on the clip duration of the video clips in the target historical videos that satisfy the requirements, comprises:

obtaining a set of historical videos;
determining the target historical videos that satisfy the requirements from the set of historical videos based on video attribute information, where the video attribute information comprises at least one of: a number of reposts, a number of views, a number of likes, a number of rewards, a number of fans and a number of comments; and
obtaining the cropping duration threshold by analyzing the clip duration of the video clips in the target historical videos.

7. The method as claimed in claim 5 or 6, wherein, in response to that the first target video clip exists in the original video clips, said determining the cropping information of the original video clips based on the beat information of the target music data and the clip duration of the original video clips comprises:

determining (S401) one or more second target video clips from the original video clips based on the cropping duration threshold; and
determining (S403) cropping information of the one or more second target video clips based on the beat information of the target music data, clip duration of the first target video clip and clip duration of the one or more second target video clips.

8. The method as claimed in claim 7, wherein, said determining (S403) the cropping information of the one or more second target video clips based on the beat information of the target music data, the clip duration of the first target video clip and the clip duration of the one or more second target video clips, comprises:

obtaining a first video by splicing the first target video clip and the one or more second target video clips based on a splicing serial number of the first target video clip and one or more splicing serial numbers of the one or more second target video clips, wherein the first video is a first video; duration of the first video is a sum of the clip duration of the first target video clip and the clip duration of the one or more second target video clips; and
determining sequentially the cropping information of the one or more second target video clips based on the beat points in the beat information and a preset processing direction.

9. The method as claimed in claim 8, wherein, the preset processing direction comprises a forward direction of a splicing direction, and said determining sequentially the cropping information of the one or more second target video clips based on the beat points in the beat information and the preset processing direction, comprises:

determining (S601) a first one of the one or more second target video clips in the first video based on the forward direction of the splicing direction;
determining (S603) a first beat point of the first one of the one or more second target video clips based on a reverse direction of the splicing direction in response to that there's no beat point at an end point of the first one of the one or more second target video clips; the first beat point being between two consecutive video frames; and determining (S605) cropping information of the first one of the one or more second target video clips based on a time point corresponding to the first beat point and a time point corresponding to the end point.

10. The method as claimed in claim 9, wherein, said determining the cropping information of the first one of the one or more second target video clips based on the time point corresponding to the first beat point and the time point corresponding to the end point, comprises:

determining a cropping duration to be cropped, of the first one of the one or more second target video clips, based on a difference between the time point corresponding to the first beat point and the time point corresponding to the end point; and
cropping the first one of the one or more second target video clips based on a preset cropping manner and the cropping duration;
the preset cropping manner comprises cropping from a head of the clip, cropping from an end of the clip, cropping from a middle of the clip and cropping based on content quality of the clip.

11. The method as claimed in claim 10, wherein, the preset cropping manner is cropping based on content quality of the clip, said cropping the first one of the one or more second target video clips based on the preset cropping manner and the cropping duration, comprises:

segmenting the first one of the one or more second target video clips into sub-clips; total duration of the sub-clips being equal to clip duration of the first one of the one or more second target video clips;
obtaining a content quality value of each of the sub-clips by a content quality assessment on each of the sub-clips based on a quality assessment parameter; and
cropping out a sub-clip that does not satisfy quality requirements from the sub-clips based on the content quality value of each of the sub-clips and the cropping duration;
the quality evaluation parameter comprises color saturation, sharpness, richness of content and brightness.

12. The method as claimed in claim 10, wherein, the preset cropping manner is cropping based on content quality of the clip, said cropping the first one of the one or more second target video clips based on the preset cropping manner and the cropping duration, comprises:

segmenting the first one of the one or more second target video clips into sub-clips; total duration of the sub-clips being larger than clip duration of the first one of the one or more second target video clips, wherein there's repeated clip in each sub-clip and adjacent sub-clip;
obtaining a content quality value of each of the sub-clips by a content quality assessment on each of the sub-clips based on a quality assessment parameter; and
cropping out a sub-clip that does not satisfy quality requirements from the sub-clips based on the content quality value of each of the sub-clips and the cropping duration;
the quality evaluation parameter comprises color saturation, sharpness, richness of content, brightness and/or degree of coherence.

13. The method as claimed in any one of claims 10 to 12, wherein, displaying the target video on the video processing interface, comprises:

performing a first splicing adjustment on the first video based on the cropped first one of the one or more second target video clips;
determining a second one of the one or more second target video clips based on the first video after the first splicing adjustment, and cropping the second one of the one or more second target video clips based on a cropping manner of the first one of the one or more second target video clips;
performing a second splicing adjustment on the first video based on the cropped second one of the one or more second target video clips, until a cropping process of a last one of the one or more second target video clips is completed;
displaying the target video on the video processing interface, where the target video is obtained after cycles of cropping and splicing of the first video.

14. An apparatus for processing a video, comprising:

an obtaining module (801) configured to obtain target music data and video clip information comprising clip duration of original video clips;
a cropping information determining module (802) configured to determine cropping information of the original video clips based on beat information of the target music data and the clip duration of the original video clips; and
a displaying module (803) configured to display a target video on a video processing interface; the target video being obtained by cropping and splicing the original video clips based on the cropping information; the target video having at least one video splicing point corresponding to beat points in the beat information, the beat information of the target music data being original beat information of the target music data.

15. A computer-readable storage medium having stored therein instructions that, when executed by a processor of an electronic device, causes the electronic device to perform the method for processing a video as claimed in any one of claims 1 to 13.

O1

O2

FIG. 1

obtaining target music data and video clip information comprising clip duration of original video clips ⟶ S201

determining cropping information of the original video clips based on beat information of the target music data and the clip duration of the original video clips ⟶ S203

displaying a target video on a video processing interface; the target video being obtained by cropping and splicing the original video clips based on the cropping information; the target video having at least one video splicing point corresponding to beat points in the beat information, wherein the beat information of the target music data is original beat information of the target music data ⟶ S205

FIG. 2

obtaining first data by sampling and quantizing the target music data — S301

obtaining first difference data by difference processing on the first data — S302

obtaining second data by time-frequency conversion on the first difference data — S303

obtaining second difference data by difference processing on the second data — S304

obtaining data in a preset number of windows by quantizing the second difference data — S305

determining the beat information of the target music data based on the data in the preset number of windows — S306

FIG. 3

determining one or more second target video clips from the original video clips based on the cropping duration threshold in response to that the first target video clip exists in the original video clips

S401

determining cropping information of the one or more second target video clips based on the beat information of the target music data, clip duration of the first target video clip and clip duration of the one or more second target video clips

S403

FIG. 4

FIG. 5

determining a first one of the one or more second target video clips in the first video based on the forward direction of the splicing direction ⟩~S601

determining a first beat point of the first one of the one or more second target video clips based on a reverse direction of the splicing direction in response to that there's no beat point at an end point of the first one of the one or more second target video clips; the first beat point being between two consecutive video frames ⟩~S603

determining cropping information of the first one of the one or more second target video clips based on a time point corresponding to the first beat point and a time point corresponding to the end point ⟩~S605

FIG. 6

FIG. 7

apparatus for processing video

obtaining module — 801

cropping information determining module — 802

displaying module — 803

FIG. 8

FIG. 9

Europäisches
Patentamt

European
Patent Office

Office européen
des brevets

# EUROPEAN SEARCH REPORT

Application Number

EP 22 16 2982

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 686 970 B1 (WINDLE JOHN RICHARD [AU]) 3 February 2004 (2004-02-03) * column 5, line 23 – column 10, line 34 * ----- | 1-15 | INV. G11B27/031 G11B27/10 |
| X | US 2009/150781 A1 (IAMPIETRO MICHAEL [US] ET AL) 11 June 2009 (2009-06-11) * paragraphs [0004] – [0007], [0010] – [0013], [0035] – [0043] * ----- | 1-15 | |
| X | WO 2021/042933 A1 (GUANGDONG OPPO MOBILE TELECOMMUNICATIONS CORP LTD [CN]) 11 March 2021 (2021-03-11) * paragraphs [0060] – [0073] * ----- | 1-15 | |

TECHNICAL FIELDS
SEARCHED (IPC)

G11B
H04N

The present search report has been drawn up for all claims

| Place of search | Date of completion of the search | Examiner |
|---|---|---|
| The Hague | 5 September 2022 | Mourik, Piet |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

**ANNEX TO THE EUROPEAN SEARCH REPORT
ON EUROPEAN PATENT APPLICATION NO.**

EP 22 16 2982

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2022

| Patent document cited in search report | | Publication date | Patent family member(s) | | Publication date |
|---|---|---|---|---|---|
| US 6686970 | B1 | 03-02-2004 | JP | 4261644 B2 | 30-04-2009 |
| | | | JP | H11234560 A | 27-08-1999 |
| | | | US | 6686970 B1 | 03-02-2004 |
| US 2009150781 | A1 | 11-06-2009 | US | 7569761 B1 | 04-08-2009 |
| | | | US | 8319086 B1 | 27-11-2012 |
| | | | US | 2009150781 A1 | 11-06-2009 |
| WO 2021042933 | A1 | 11-03-2021 | CN | 110519638 A | 29-11-2019 |
| | | | EP | 3979658 A1 | 06-04-2022 |
| | | | US | 2022148622 A1 | 12-05-2022 |
| | | | WO | 2021042933 A1 | 11-03-2021 |

EPO FORM P0459

For more details about this annex : see Official Journal of the European Patent Office, No. 12/82